(19) Europäisches Patentamt

European Patent Office

Office européen des brevets

(11) **EP 1 727 347 A1**

(12) **EUROPEAN PATENT APPLICATION**

(43) Date of publication:
**29.11.2006 Bulletin 2006/48**

(51) Int Cl.:
*H04N 1/047* (2006.01)   *H04N 1/387* (2006.01)

(21) Application number: **06010583.0**

(22) Date of filing: **23.05.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **26.05.2005 JP 2005154259**

(71) Applicant: **Ricoh Company, Ltd.
Tokyo 143-8555 (JP)**

(72) Inventors:
• **Suzuki, Shinichi
Yokosuka-shi
Kanagawa (JP)**
• **Morikawa, Minoru
Kawasaki-shi
Kanagawa (JP)**
• **Ishima, Kazumi
Yokohama-shi
Kanagawa (JP)**

(74) Representative: **Schwabe - Sandmair - Marx
Stuntzstrasse 16
81677 München (DE)**

(54) **Raster image processing method, image processing method, rasterizing device, and image forming device**

(57)   A raster image processing method is adapted for a rasterizing device which converts original image data into raster image data suitable for an image forming device having a plurality of recording heads and performing recording of an image on a recording medium using the plurality of recording heads. The original image data is divided into image data elements for areas of the recording medium for the plurality of recording heads to perform the recording of the image respectively. The divided original image data elements are rasterized into the raster image data suitable for the image forming device.

## FIG.1

EP 1 727 347 A1

**Description**

BACKGROUND OF THE INVENTION

1. Field of the Invention

The present invention generally relates to a raster image processing method, an image processing method, a rasterizing device, and an image forming device. More particularly, the present invention relates to a raster image processing method, an image processing method, a rasterizing device, and an image forming device which are adapted to correct a deviation of an image in image formation processing by a plurality of recording heads.

2. Description of the Related Art

Japanese Laid-Open Patent Application No. 2004-147260 discloses an image forming device which eases correction of a deviation of each divided image data element when the original image data is divided into a plurality of divided image data elements and an image formation process is performed by using two or more recording heads.

Japanese Laid-Open Patent Application No. 11-291566 discloses a rasterizing method which includes a command converting step of converting respective commands of image data described by the page description language into commands for every area of a plurality of divided frame buffer areas 1, 2, 3, and 4, a storage step of storing the commands for every area into the queues of a plurality of sub-processors, respectively, and an expansion step of causing the plurality of sub-processors to develop bit image data from the respective commands in the queues thereof. In the expansion step of the rasterizing method, the plurality of sub-processors are caused to develop the respective bit image data in parallel.

Moreover, Japanese Patent No. 3604961 discloses an image forming device in which the actual printing area in which image information is recorded on a recording medium or an intermediate recording medium is divided at the boundary part into at least two areas, so that the two areas have a mutually overlapping area at the boundary part. And in the image forming device, three or four position marks in the exposure area including the overlapping area are exposed to light, and the image forming device is configured to include a relative position difference detection unit which computes the amount of deviation of the area that can be exposed, from a detection value of the amount of deviation between the position marks, and an image information correction unit which corrects image information based on the amount of deviation of the area that can be exposed, so that an image formed by each image information forming unit matches the actual printing area.

In these years, the image used for printing (or the print image) has come to contain an increasingly large amount of information. For example, when a monochrome image is printed to a sheet with the size 636mm x 939mm at the resolution 2400dpi, the amount of information, assuming that one dot is expressed by one bit, is about 5.3 Gbits (which amounts to about 666 Mbytes). If a monochrome image is printed to the same sheet at the resolution 4800dpi, the amount of information in this case is 4 times as large as the amount of information in the previous case, and it amounts to about 2.7 Gbytes.

Usually, the currently marketed personal computer is provided with a 32-bit CPU, and the address space of the CPU is expressed by 32 bits. The address space in this case is equivalent to about 4 Gbytes. In such computers, the above-mentioned print image has a large amount of information, so that most of the address space (memory space) of the CPU may be consumed.

However, the OS (operating system) of the computer generally maintains the memory space for operation of the OS. Therefore, the application program cannot use the entire memory space 4 GB as the memory space for executing the application program.

In the case of the OS which holds 2 GB as the memory space for operation of the OS, only the remaining memory space 2 GB can be used as the memory space for executing the application program.

If a demand for printing an image at a further high resolution, or a demand for printing an image on a copy sheet with a larger size, must be processed and the amount of information of the print image exceeds 4GB, then the amount of information contained in the print image exceeds the memory space, available to the currently marketed computer, which is expressed by 32 bits. Thus, it is difficult for the computer to deal with the print image.

If a high-end computer provided with a 64-bit CPU in which the address space is expressed with 64 bits is used, a larger memory space is available to the computer. The problem of discrepancy between the amount of information of the print image and the memory space may be solved by using the high-end computer. However, the processing time needed for image formation will be increased in proportion to an increase in the amount of information of a print image.

In order to correct the formed image as disclosed in Japanese Laid-Open Patent Application No. 2004-147260, it is necessary to secure the new storage capacity of the memory exceeding the amount of information contained in the original image. In addition, in order to correct a deviation, the drawing image is copied from the original image. However, the amount of information of the copied image is very large, and the processing time needed is also long.

Namely, in the case of the image forming device disclosed in Japanese Laid-Open Patent Application No. 2004-147260, after the drawing image is copied from the original image data, the original image data is divided into a plurality of divided image data elements, the divided image data elements are assigned for the plural recording heads, and image formation processing is performed by using the plural recording heads. For this reason, there is a problem that the processing time becomes long.

In the case of a computer provided with a virtual memory, a large amount of data can be stored in a hard disk drive (HDD). For this reason, the access speed in this case is remarkably slower than the access speed in the case of accessing data on a semiconductor memory. The problem can be eased if a semiconductor memory having the storage capacity that can store the entire print image in the semiconductor memory is provided.

However, the problem that the cost for storage in the case of the semiconductor memory is higher than in the case of the HDD remains unsolved.

The currently marketed computer is usually provided with the memory cache function, and even if the amount of information of a print image is large, the computer can perform the sequential processing to read out the image data elements from the memory sequentially. If the sequential processing can be performed by the computer, the processing time needed for image formation processing hardly becomes a severe problem.

However, in the case of image formation processing performed by using the plurality of recording heads, it is necessary to deal with the image data including image data elements which corresponds to distant portions of the original image. The sequential access to the memory cannot be performed, and the memory cache function does not work effectively. As a result, the processing time needed for image formation becomes long.

SUMMARY OF THE INVENTION

According to one aspect of the invention, there is provided an improved raster image processing method in which the above-mentioned problems are eliminated.

According to one aspect of the invention, there is provided one of a raster image processing method, an image processing method, a rasterizing device, and an image forming device which are adapted for correcting a deviation of the image in image formation processing with a small storage capacity and in a short processing time.

In an embodiment of the invention which solves or reduces one or more of the above-mentioned problems, there is provided a raster image processing method adapted for a rasterizing device which converts original image data into raster image data suitable for an image forming device having a plurality of recording heads and performing recording of an image on a recording medium using the plurality of recording heads, the method comprising the steps of: dividing the original image data into image data elements for areas of the recording medium for the plurality of recording heads to perform the recording of the image respectively; and rasterizing the divided original image data elements into the raster image data suitable for the image forming device.

In an embodiment of the invention which solves or reduces one or more of the above-mentioned problems, there is provided an image processing method adapted for an image forming device having a plurality of recording heads and performing recording of an image on a recording medium using the plurality of recording heads, the image processing method comprising the steps of: storing a positional relation between each of the plurality of recording heads and the recording medium, and optical-path information related to an irradiation energy of each of the plurality of recording heads; computing coordinates of an intersection between the recording medium and an optical path of the irradiation energy of each recording head based on the stored positional relation and the stored optical-path information; computing a correction value for correcting deviation information, based on the coordinates of intersection, the deviation information indicating an amount of deviation between recording positions of adjacent ones of the plurality of recording heads; and correcting the deviation information of the adjacent ones of the plurality of recording heads by using the computed correction value.

According to the embodiments of the invention, it is possible to provide the raster image processing method, the image processing method, the rasterizing device, and the image forming device which can correct a deviation of the image in image formation processing with a small storage capacity and a short processing time.

BRIEF DESCRIPTION OF THE DRAWINGS

Other objects, features and advantages of the present invention will be apparent from the following detailed description when reading in conjunction with the accompanying drawings.

FIG. 1 is a perspective diagram showing the composition of an image forming device in an embodiment of the invention.

FIG. 2 is a diagram showing the composition of one of a plurality of recording heads in the image forming device of FIG. 1.

FIG. 3 is a perspective diagram showing the composition of a modification of the image forming device of FIG. 1.

FIG. 4 is a diagram showing the ideal record ranges of a plurality of recording heads on a recording medium.

FIG. 5 is a diagram showing the actual record ranges of the plurality of recording heads on the recording medium.

FIG. 6 is a diagram for explaining the amounts x and y of deviation between the ideal record range and the actual record range.

FIG. 7 is a diagram showing an example of the areas of the recording heads as a result of rasterizing of original image data.

FIG. 8 shows an example of the areas of the recording heads as a result of rasterizing of original image data.

FIG. 9 is a diagram showing a case in which a gap exists between the area of recording head Rm and the area of recording head Rm+1.

FIG. 10 is a diagram showing the manner the width Rwm of the area of recording head Rm is changed according to deviation information.

FIG. 11 is a diagram showing the areas of the respective recording heads which are obtained as a result of dividing of original image data.

FIG. 12 is a diagram showing the m-th raster image data element Sm in which non-printing data is contained.

FIG. 13 is a diagram for explaining the relation between scanning of recording head Rm and raster image data.

FIG. 14 is a diagram for explaining the correction of raster image data.

FIG. 15 is a diagram showing an example of a display screen which indicates deviation information.

FIG. 16 is a diagram showing an example of a display screen in which a distance between the recording medium and the recording head is inputted and displayed.

FIG. 17 is a diagram showing an example of a display screen in which one of alternatives is selected as the distance between the recording medium and the recording head.

FIG. 18 is a diagram showing an example of a display screen in which the amount of deviation and the amount of correction are indicated for each recording head.

FIG. 19 is a diagram showing an example of a display screen in which the amount of deviation after correction exceeding a predetermined deviation level is indicated.

FIG. 20 is a diagram showing an example of raster image data of each recording head in which predetermined marks are embedded at predetermined positions.

FIG. 21 is a block diagram showing the composition of a system including the rasterizing device in an embodiment of the invention.

FIG. 22 is a block diagram showing the composition of an image forming device in an embodiment of the invention.

FIG. 23 is a timing chart for explaining a case in which recording start coordinates are changed independently of each recording head.

FIG. 24 is a perspective diagram showing an example of a plurality of recording heads arranged in a staggered manner.

FIG. 25 is a diagram showing the appearance of the recording heads arranged in the staggered manner when viewed from the lateral direction.

FIG. 26 is a perspective diagram showing the composition of a variation of the image forming device of FIG.1 in which a camera is incorporated.

## DETAILED DESCRIPTION OF PREFERRED EMBODIMENTS

A description will now be given of an embodiment of the invention with reference to the accompanying drawings.

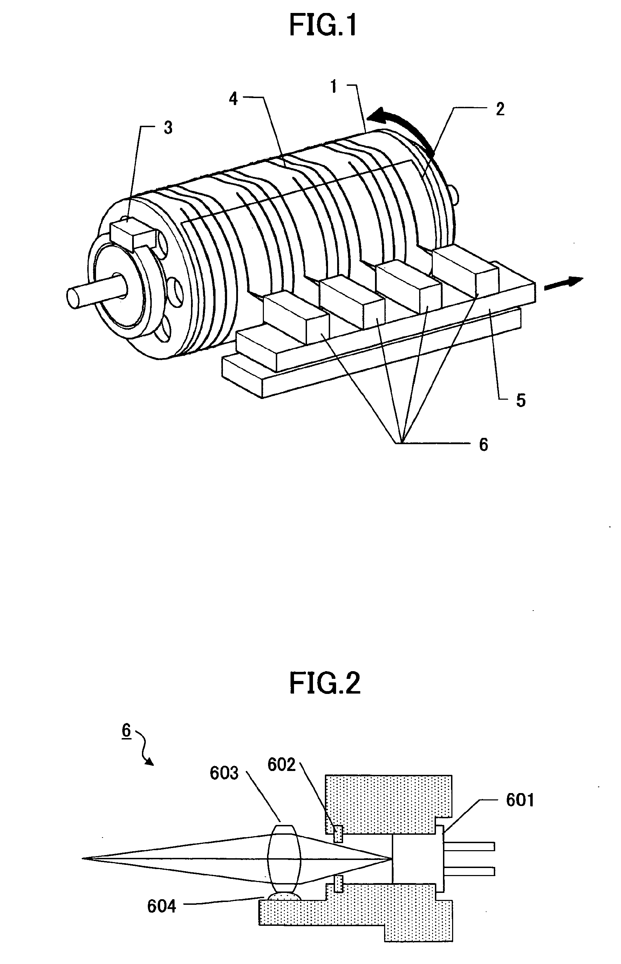

FIG. 1 shows the composition of an image forming device in an embodiment of the invention. The image forming device of FIG. 1 comprises a drum 1, a recording medium 2, a drum encoder 3, a moving stage 5, and a plurality of recording heads 6.

The drum 1 is rotated around the central axis of the drum 1 in the direction indicated by the arrow in FIG. 1, by a rotation drive mechanism (not shown). The recording medium 2 is provided on the cylindrical surface of the drum 1. The plurality of recording heads 6 are mounted on the moving stage 5 and this moving stage 5 is moved in the direction indicated by the arrow in FIG. 1, which is parallel to the axial direction of the drum 1.

As shown in FIG. 1, the four recording heads 6, each of which outputs energy to the recording medium 2, are arranged on the moving stage 5 at intervals of substantially equal distances. The drum encoder 3 is arranged on the drum 1.

Each of the recording heads 6 outputs energy to the recording medium 2, so that an image is recorded on the recording medium 2. The energy output to the recording medium 2 by each of the recording heads 6 may include light, heat, and collision of substances or ink. For example, in a case in which the output energy is light, each of the recording heads 6 is arranged so that a laser beam output from the laser light source is focused on the recording medium 2 using a focusing lens. In each of the recording heads 6, in accordance with the ON/OFF state of the laser beam emission, one of the image portion which reacts to the recording medium 2, and the image portion which does not react is selectively applied so that an image is formed on the recording medium 2.

FIG. 2 shows the composition of one of the plurality of recording heads 6 in the image forming device of FIG. 1.

As shown in FIG. 2, the recording head 6 comprises a laser diode (LD) 601, an aperture 602, and a lens 603. The lens 603 is constituted by an aspheric lens and secured to the recording head 6 with the adhesive 604.

An example of the LD 601 is a semiconductor laser light source. The laser beam outputted from the LD 601 is adjusted by using the aperture 602 and the lens 603 so that the laser beam is focused on the recording medium 2.

The recording medium 2 is adapted such that the portion of the recording medium 2 where the energy is outputted from the recording head 6 and the portion of the recording medium 2 where the energy is not outputted from the recording head 6 have different physical properties, so that an image is recorded on the recording medium 2. For example, the image is recorded on the recording medium 2 through any of chemical change, phase change, and configuration change of the recording medium 2.

In the case of the recording medium 2 utilizing light as the energy source, a photosensitive material which reacts through the heat of a laser light beam may used as the material of the recording medium 2.

Next, the operation of the image forming device of FIG. 1 will be explained.

The drum 1 is rotated around the central axis thereof by the rotation drive mechanism, such as a motor. The drum encoder 3 detects a predetermined position of the drum 1 during the rotation and outputs a signal synchronized with the time the predetermined position of the drum 1 is detected during the rotation. The image forming device detects the home position of the drum 1 which corresponds to a rotation start position within one rotation of the drum 1, by using the output signal of the drum encoder 3.

The image forming device acquires the positional relation between the recording medium 2 and the recording head 6 by using the drum encoder 3, and determines the record timing at which the recording head 6 optically writes information to the recording medium 2, based on the acquired positional relation.

Moreover, the image forming device detects the home position of the drum 1, and controls the plurality of recording heads 6 so that an image is recorded in the recording medium 2. Each of the recording heads 6 performs one main scanning on the recording medium during one rotation of the drum 1. After one main scanning to the recording medium 2 is completed, the moving stage 5 is moved in the direction indicated by the arrow in FIG. 1 by a distance corresponding to one sub-scanning. The image forming device carries out scanning of the recording medium 2 by performing the main scanning and the sub-scanning in a repeated manner. The image formation processing is completed by the image forming device after the scanning of a predetermined range of the recording medium 2 is completed by the plurality of recording heads 6.

In the above-mentioned operation of the image forming device, the sub-scanning to the recording medium 2 is performed by the plurality of recording heads 6 in a stepwise manner for every rotation of the drum 1. Alternatively, the image forming device may be configured so that the sub-scanning to the recording medium 2 arranged in a spiral configuration is performed by the plurality of recording heads 6 in a generally continuous manner, instead of the stepwise manner as in the above-mentioned operation. In such alternative, the moving stage 5 is continuously moved to the drum 1 at a constant speed which causes one rotation of the drum 1 for one sub-scanning to the drum 1.

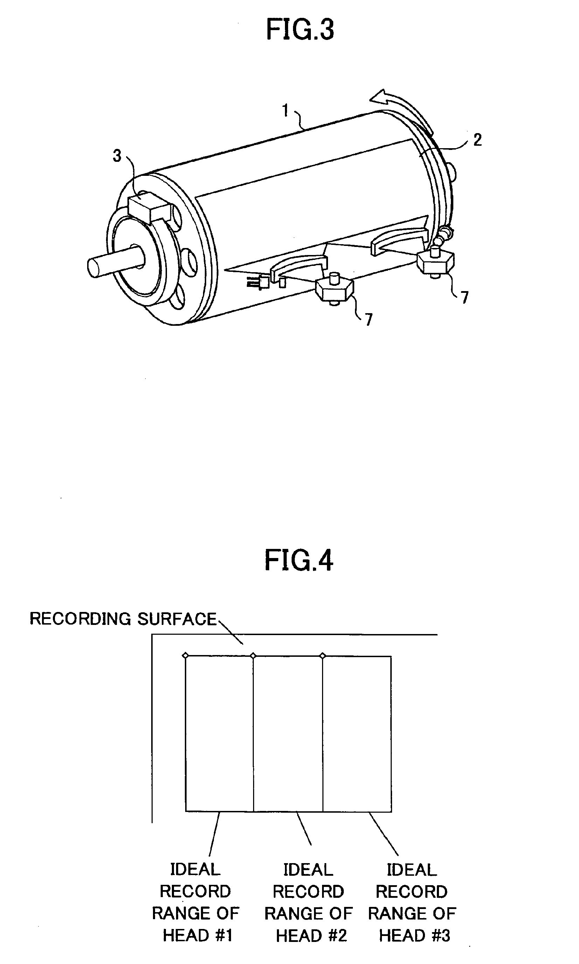

FIG. 3 shows the composition of a modification of the image forming device of FIG. 1. As shown in FIG. 3, the image forming device is provided with a plurality of polygon scan heads 7, and an image is recorded on the recording medium 2 by using the plurality of polygon scan heads 6.

The image forming device of FIG. 3 comprises the drum 1, the recording medium 2, the drum encoder 3, and the plurality of polygon scan heads 7. In the case of the image forming device of FIG. 3, the direction of the main scanning to the recording medium 2 corresponds to the direction of the scanning by each of the plurality of polygon scan heads 7, and the direction of the sub-scanning to the recording medium 2 corresponds to the direction of the rotation of the drum 1.

Next, the definition of the terms used in the following embodiments will be explained.

Original image data means image data that expresses an image being formed on the recording medium by the image forming device. For example, some original image data may be described using the page technique language to indicate graphics by characters including character string codes and character font specifying parameters or by parameters of a point or surface function. Moreover, some original image data may be described with the page description language containing bit map data or with bit map data of an arbitrary resolution.

Rasterizing means transforming of original image data into data in the form of representing a set of points which enables the image forming device to record the image on the recording medium 2. For example, one bit included in the rasterized image data corresponds to one dot included in the image which is recorded on the recording medium 2. In the rasterizing, an optical density gradation is transformed into a number of dots per fixed area, such as halftone dots.

Deviation information means the amount of discontinuity or deviation between the ideal record range and the actual record range of each of the respective recording heads 6 on the recording medium 2. FIG. 4 shows the ideal record ranges of the plurality of recording heads 6 on the recording medium 2. In the case shown in FIG. 4, the ideal record range of one of the recording heads 6 on the recording medium 2 is continuous to the ideal record range of the neighboring recording head 6.

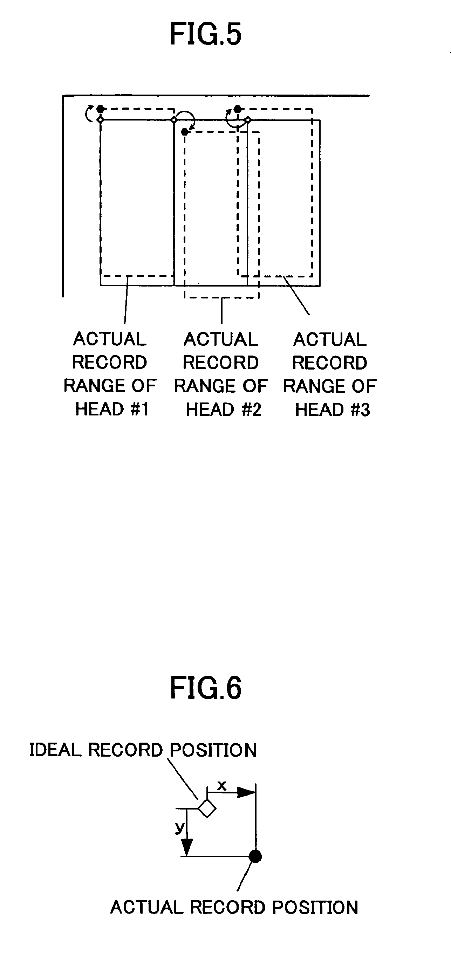

However, due to manufacturing variations or assembly tolerances, the actual record range of one of the recording heads 6 on the recording medium 2 is not continuous to the actual record range of the neighboring recording head 6 as indicated by the dotted lines in FIG. 5. FIG. 5 shows the actual record ranges of the plurality of recording heads 6 on the recording medium 2. Thus, the amount of deviation between the ideal record range and the actual record range can be determined as being the positional differences (x, y) as shown in FIG. 6.

In the case of FIGs. 4-6, the record range is expressed as being the rectangular range, and the amount of deviation between the ideal record range and the actual record range can be expressed with the amount of displacement of rectangle apex coordinates.

In the above example, the amount of deviation is expressed as being the difference between the ideal apex coordinates and the actual apex coordinates. The problem of the discontinuity in the reproduced image will not arise if there is no gap between the adjacent record ranges of the plurality of recording heads 6. Therefore, the amount of deviation between the ideal record range and the actual record range may be considered as being the relative distance between the adjacent pixels in the adjacent record ranges, which pixels should adjoin ideally.

A process means the unit of processing which is performed by the program. Also, a process is the unit to which the resources, such as memory and HDD, are assigned by the OS. In the OS which can provides multitasking environment, the CPU switches from one of the plurality of processes to an so quickly that it gives the appearance of executing all of the processes simultaneously. In the OS of the computer provided with two or more CPUs, the plurality of processes can actually be performed in parallel.

Scanning information means the data included in the raster image data derived from the original image data to express the position where the recording medium should be scanned at the time of image formation.

Next, the raster image processing method in an embodiment of the invention will be explained.

In this embodiment, P denotes the plane-coordinate space of the image expressed by the original image data, Q denotes the plane-coordinate space of an image on the recording medium 2, and R denotes the plane-coordinate space of the image expressed by the raster image data. Moreover, in this embodiment, W denotes the width of the maximum image recorded in the plane-coordinate space Q on the recording medium 2, H denotes the height of the maximum image recorded in the plane-coordinate space Q on the recording medium 2, $Rw1, Rw2, ..., Rwn$ denote the record widths of the "n" recording heads $R1, R2, ..., Rn$, and $Rh1, Rh2, ..., Rhn$ denote the record heights of the "n" recording heads $R1, R2, ..., Rn$. Suppose that the record heights $Rhl$-$Rhn$ in this embodiment are set to meet the conditions: $Rh1 = Rh2 = ... = Rhn$.

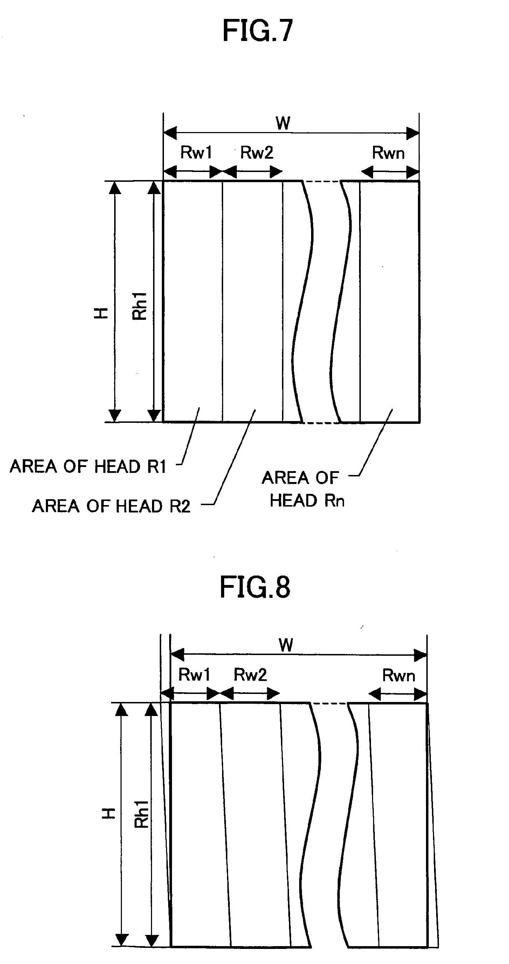

The image on the recording medium 2 is divided into the areas of the "n" recording heads 6 as shown in FIG. 7. FIG. 7 shows an example of the areas of the recording heads as a result of rasterizing of the original image data.

As shown in FIG. 7, the rasterizing of the original image data is performed within the ranges of width W and height H. For example, the record area where the m-th recording head $Rm$ should record the image on the recording medium corresponds to the range of width $Rwm$ and height $Rhm$ which is a partial range of the plane-coordinate space P of the original image data. Since the original image data with which each recording head $Rm$ deals may be independent, if a single recording head $Rm$ is taken into consideration, only the part of the original image data falling within the range of width $Rwm$ and height $Rhm$ is dealt with by that recording head $Rm$.

Therefore, when carrying out the rasterizing of the original image data, the rasterizing device divides the original image data into the areas of the recording heads $Rm$.

After transforming the command in the page description language of the original image data into the command aligned with the area of recording head $Rm$ as in the previously mentioned method disclosed in Japanese Laid-Open Patent Application No. 11-291566, the rasterizing of the method of division may be performed.

The method of division may provide the clipping range united with the area of recording head $Rm$, and may develop and carry out the rasterizing only of the command of the original image data in connection with the range.

In this case, it is not necessary to perform division of original image data, and a division step and a rasterizing step are performed simultaneously. For example, the drawing data of the equation and the original image data which express the area of recording head $Rm$ as clipping, are developed by choosing the command used as point of intersection or the interior.

Rasterizing processing may be performed in a different process per area of recording head $Rm$. For example, the rasterizing device starts two processes, makes the rasterizing of the area of recording head $R1, R3, R5,$ and ... process in the first process, and makes the rasterizing of the area of recording head $R2, R4, R6,$ and ... process in the second process.

The processing time for the rasterizing can be shortened by using a single computer provided with a plurality of CPUs. In addition, a plurality of processes may be carried out by two or more different computers.

In a case of an image forming device which draws a scanning trace in a spiral formation on the recording medium, the areas for the plurality of recording heads are divided as shown in FIG. 8. The area for each recording head $Rm$ is in the shape of a parallelogram.

In this case, the rasterizing device is adapted for providing a clipping range in the shape of a parallelogram at the time of bit map expansion of rasterizing. For example, an ID which identifies the list of image data may be given to the original image data element created for each recording head Rm by the rasterizing, and the raster image data may be stored as individual files. Or the raster image data with the list of image data may be connected as a single file.

Next, the raster image processing method in another embodiment of the invention will be explained.

In this embodiment, P denotes the plane-coordinate space of the image expressed by the original image data, Q denotes the plane-coordinate space of an image on the recording medium 2, R denotes the plane-coordinate space of the image expressed by the raster image data, and S denotes the plane-coordinate space which should be corrected by the deviation information.

According to the previously described embodiment, it is difficult to eliminate the amount of deviation between the adjacent ones of the plurality of recording heads. To obviate the problem, the rasterizing device in this embodiment is adapted to detect the respective amounts of deviation for the plurality of recording heads beforehand, and stores the deviation information indicating the respective amounts of deviation detected for the plurality of recording heads into the memory.

Suppose that the stored deviation information includes the amount of deviation for the m-th recording head Rm and the (m+1)-th recording head Rm+1, and the amount of deviation is represented by xm and ym.

When xm is positive, the rasterizing device determines that a gap exists between the area of recording head Rm and the area of recording head Rm+1. When xm is negative, the rasterizing device determines that there is an overlap between the area of recording head Rm and the area of recording head Rm+1.

When ym is positive, the rasterizing device determines that the area of recording head Rm+1 is located below the bottom of the area of recording head Rm. When ym is negative, the rasterizing device determines that the area of recording head Rm+1 is located above the top of the area of recording head Rm.

(Area computing step)

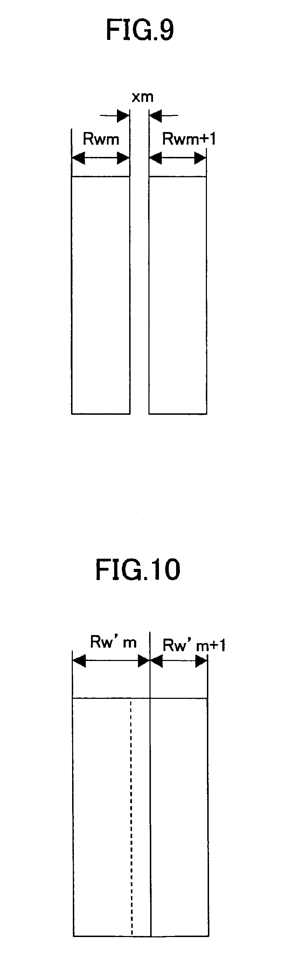

FIG. 9 shows a case in which a gap exists between the area of recording head Rm and the area of recording head Rm+1.

As shown in FIG. 9, when the amount of deviation xm exists between the area of recording head Rm and the area of recording head Rm+1 in the plane coordinate space Q on the recording medium 2, the rasterizing device computes the area of recording head Rm by obtaining a new width Rw'm (= Rwm+xm) from the deviation-included width Rwm+xm based on the deviation information related to the m-th recording head Rm.

The new width Rw'm may contain a fraction with respect to the width of one scanning. In this case, the rasterizing device in this embodiment is adapted to round off the fraction in the new width Rw'm on the basis of one scanning interval.

In the case where a gap is vacant between width Rwm and width Rwm+1, the positive direction of xm is meant, and the negative direction of xm is meant in the case there is an overlap with the same width Rw'm. The rasterizing device can express the case where width Rwm and width Rwm+1 overlap also.

FIG. 10 shows the manner the width Rwm of the area of the recording head Rm is changed according to the deviation information. In this manner, the rasterizing device of this embodiment is adapted to change the width Rwm of the area of the recording head Rm according to the deviation information.

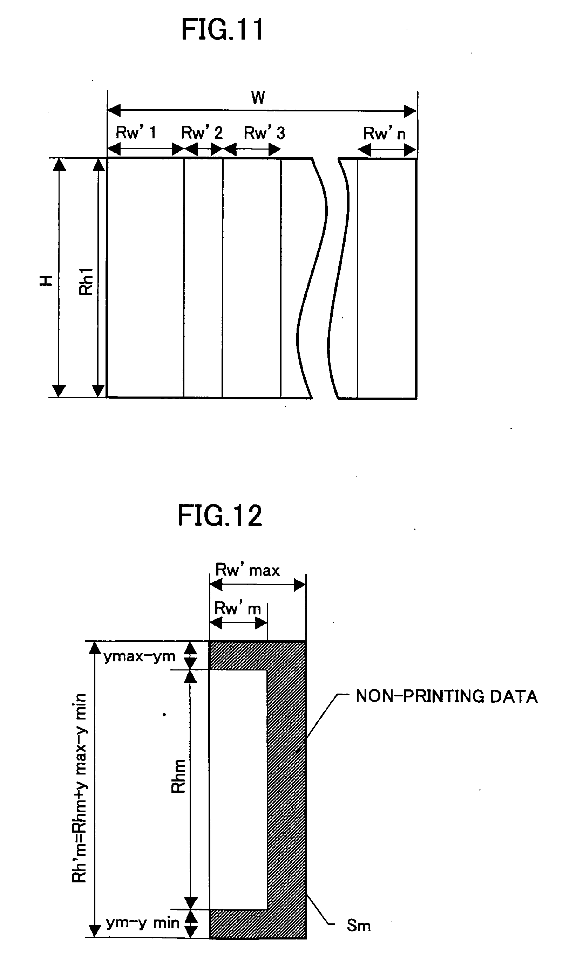

FIG. 11 shows the areas of the respective recording heads which are obtained as a result of dividing of the original image data. As shown in FIG. 11, the width Rw'm of the area of the original-image-data P where the recording head Rm records the image on the recording medium 2 is changed with the recording head m.

(Division step)

In a division step, the rasterizing device divides and performs the rasterizing of the original image data according to the area of each recording head Rm as shown in FIG. 11.

In the following, image data that is obtained as a result of rasterizing of the original image data will be called raster image data.

After transforming each command of original image data in the page description language into a command suitable for the area of the recording head Rm as in the previously mentioned rasterizing method disclosed in Japanese Laid-Open Patent Application No. 11-291566, the rasterizing of the method of division may be performed.

The method of division may provide the clipping range united with the area of recording head Rm, and may develop and carry out the rasterizing only of the command of the original image data in connection with the range.

In this case, it is not necessary to perform division of original image data, and a division step and a rasterizing step are performed simultaneously.

The drawing data of the equation and original image data which express the area of recording head Rm as clipping, for example chooses the command used as point of intersection or the interior, and develops.

(Raster image correction step)

In the raster image correction step, the divided original image data elements for the plurality of recording heads, created in the above-mentioned division step, are transformed into raster image data in a form suitable for the image forming device to deal with the image data. Moreover, in the raster image correction step, the raster image data is corrected so as to eliminate the deviations indicated by the deviation information xm.

The respective widths of the areas of the plurality of recording heads are different from one another because of the deviations indicated by the deviation information. For this reason, the sizes of the corrected raster image data elements are different for the plurality of recording heads, and the transfer processing to transfer the corrected raster image data to the plurality of recording heads becomes complicated.

To obviate the problem, the rasterizing device in this embodiment is adapted to add non-printing data (which are not used for the printing) to the corrected raster image data elements so that the elements of the corrected raster image data including the added non-printing data have the same size for the plurality of recording heads. Specifically, the rasterizing device adds the non-printing data to the corrected raster image data elements so that the elements of the corrected raster image data including the added non-printing data have a size that is equal to the maximum width Rw' max among the widths Rw'm of the areas for the respective recording heads Rm.

Moreover, the rasterizing device in this embodiment is adapted to correct the raster image data so as to eliminate the deviations indicated by the deviation information ym. The rasterizing device detects the smallest value ymin and the largest value ymax included in the deviation information ym. In order to make equal size of the raster image data elements for all the plurality of recording heads Rm, the rasterizing device adds non-printing data having the height of ymax-ym to the top of the m-th raster image data element, and adds non-printing data having the height of ym-ymin to the bottom of the m-th raster image data element. The new height Rh'm of the m-th raster image data element is represented by the formula: Rh'm = Rhm+ymax-ymin.

The width Rw'm may contain a fraction with respect to the width of one scanning. In this case, the rasterizing device in this embodiment is adapted to round off the fraction of the width Rw'm on the basis of one scanning interval. FIG. 12 shows the m-th raster image data element Sm in which the non-printing data is contained. Since the processing of the respective recording heads Rm can be performed independently, the raster data correction processes for the plurality of recording heads may be performed in parallel simultaneously.

After the correction related to the deviation information xm and ym to the raster image data elements is performed for all the plurality of recording heads, the resulting raster image data elements are shifted in the direction opposite to the height direction of the deviation. If such data elements are outputted to the image forming device having the deviations, the deviations are canceled each other and the correct image formation can be attained.

In this embodiment, expansion/reduction of the m-th raster image data element is performed to match the difference to the (m+1)-th raster image data element. Alternatively, expansion/reduction of the (m+1)-th raster image data element may be performed to match the difference to the m-th raster image data element.

If the resulting raster image data is stored in a single file collectively and the elements of the raster image data have for the plurality of recording heads the same size, the plurality of recording heads can access the corresponding raster image data elements simultaneously by using a simple addressing. This is because the image data elements required for the respective recording heads at the same record timing are located regularly at intervals of a fixed address.

Next, the raster image processing method in another embodiment of the invention will be explained.

In the raster image processing method of the above-mentioned embodiment, the non-printing data is added to the raster image data. However, in order to add image data of a new column or new row to the raster image data, it is necessary to transfer the raster image data from the previous area to another area on the computer memory. Namely, the operation of moving or copying of image data on the computer memory is required, and the processing speed will fall.

To obviate the problem, the rasterizing device in this embodiment is adapted as follows. The area equivalent to the non-printing data of FIG. 12 mentioned above is considered to be a margin, and it is prepared for the raster image data beforehand as a margin at the time of rasterizing. That is, the rasterizing device secures beforehand the area of a suitable size containing the non-printing data having the width Rw'max and the height Rh'm at the time of rasterizing, and develops the raster image data containing the non-printing data in the prepared area.

According to the rasterizing device of this embodiment, the image as shown in FIG. 12 is obtained when the division step is completed, and the raster image correction step may be skipped. For this reason, in the rasterizing device of this embodiment, the task for moving or copying the raster image data between the distant addresses on the computer memory can be excluded, and the processing time can be shortened.

Next, the raster image data processing method in another embodiment of the invention will be explained.

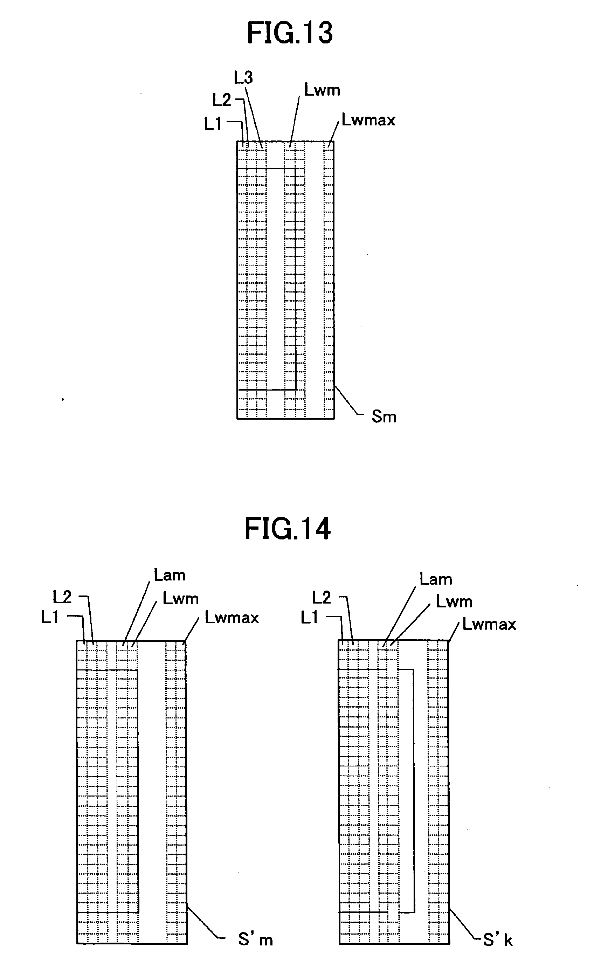

FIG. 13 shows the relation of the scans of the recording head Rm and the raster image data. In this embodiment, respective scans when the m-th recording head Rm records the raster image data element Sm are set to scans L1, L2, L3, ..., Lwmax. Scan Lwmax is the last scan. Scan Lwm is the last scan among the scans in which the raster image data elements are recorded. For the respective recording heads R1-Rn, the last scan among the scans in which the raster image data elements are recorded are set to scans Lw1, Lw2, ..., Lwm, ..., Lwn, respectively.

The specific position of the scan Lwm among all the scans can be determined from the width Rw'm and the scanning interval o of the image concerned. Specifically, what is necessary is to divide the width Rw'm by the scanning interval σ, as in the following formula (1). A fraction rm may arise as a result of the division by the formula (1), but the fraction rm in such a case is truncated.

$$(Rw'm + 0.5)/\sigma \quad ... \quad (1)$$

If it is the width Rw'm computed according to the area computing step of the previous embodiment, it is meant by being referred to as the fraction um (=rm-0.5), and the sign of the fraction indicates that a gap or an overlap exists. If the sign of the fraction is positive, the interval is larger than one scanning. If the sign of the fraction is negative, the interval is narrower than one scanning. For example, when the fraction um is 0.2, it means that there is a gap having the width equivalent to 1/5 of one scanning.

Using the fraction um, the rasterizing device corrects the gap or overlap between the scan Lwm of the m-th recording head Rm and the scan L1 of the (m+1)-th recording head Rm+1.

Next, the procedure which corrects the gap or overlap between the scan Lwm of the m-th recording head Rm and the scan L1 of the (m+1)-th recording head Rm+1 using the fraction um will be explained.

First, the rasterizing device creates the scanning information data indicating the scan in which the raster image data element Sm is recorded. For example, the scanning information data is expressed with the coordinates of the moving stage 5 when each scan, such as scan L1 or L2, is performed, or with the distance from scan L1. And the rasterizing device associates the scanning information data and the raster image data.

Next, the rasterizing device corrects the scanning position of scan Lwm by the fraction um. For example, the rasterizing device shifts by the half fraction um/2 the scanning information data associated with the scan Lwm in the direction apart from the preceding scan Lwm-1 of the scan Lwm.

Then, the scanning position of the scanning information data by the scan Lwm is changed to the middle point between the image by the preceding scan Lwm-1 of the m-th recording head Rm and the image by the scan L1 of the (m+1)-th recording head Rm+1.

However, a problem arises with respect to the remaining image data elements other than the raster image data element Sm created by the m-th recording head Rm. All the recording heads R1-n are moved simultaneously, and the scanning positions of the images which are recorded simultaneously with the scan Lwm by the recording head Rm will also be changed. In the rasterizing device, before the scan Lwm of the m-th recording head Rm, a new scan Lam is added and the non-printing data for one scanning is inserted therein. The scanning position of the new scan Lam is the same as the scanning position of the scan Lwm before correction by the fraction um.

The rasterizing device stores the scanning information data indicating the scanning position of the new scan Lam. The rasterizing device performs the correction that is the same as the correction to the raster image data element Sm, to the raster image data elements of other recording heads which have the logging width of the original image data equal to the width Rw'm, and have the same fraction um as that of the recording head Rm. In the case of the raster image data elements of other recording heads, the processing differs from the processing of the raster image data element Sm.

Next, the k-th recording head Rk which has the logging width of the original image data equal to the width Rw'm and has the same fraction um as that of the recording head Rm will be explained.

FIG. 14 shows the correction to raster image data. For example, in the case of the raster image data element Sk of the k-th recording head Rk, the rasterizing device adds the non-printing data for one scanning at the end of the scan Lam of the k-th recording head Rk.

For this reason, at the time of the scan Lwm, only the images of the recording heads which have the same fraction um are recorded.

The images of other recording heads serve as the non-printing data. At the time of the scan Lam, the image of the recording head with the same fraction um serves as the non-printing data. The images of other recording heads are recorded. That is, the image at the time of the scan Lwm can be made independent of the images of other recording heads.

The rasterizing device performs the above-mentioned processing for all the "n" recording heads. That is, the rasterizing device repeatedly performs the correction to the raster image data for each of "u1" to "un". By this processing, the rasterizing device creates the raster image data with which "n" scans at the maximum are increased.

In this manner, if the fraction um is treated without change, the number of scans added by the rasterizing device will increase. For example, the scanning positions differ when the fractions um are 0.2 and 0.21, and the two additional scans are added by the rasterizing device and the number of scans will increase. Practically, the increase in the number of scans can be suppressed by providing a given tolerance for the fraction um. For example, the rasterizing device in this embodiment divides the range of the fraction um on the basis of 1/5 of one scanning, into the range elements: -0.5<um≦-0.3, -0.3<um≦-0.1, -0.1<um≦0.1, 0.1<um ≦0.3, and 0.3<um≦0.5.

This scanning information data is common to the raster image data elements for all the plurality of recording heads. The scanning information data may be embedded and stored in the raster image data. The scanning information data may be stored independently from the raster image data elements. If the scanning information data is stored independently, it is not necessary to embed the scanning information data in the raster image data element of each recording head, and it is possible to make the size of a file small.

Since each pixel data of raster image data can narrow outline being arranged and the address range of data specification, its efficiency of data transfer is good for the turn that a scan is performed. The scanning information data may be rearranged according to the sequence of the raster image data elements. In addition, a specific code indicating the association may be given to the raster image data and the scanning information data, so that the association may be recognized by the computer from the given code.

In this embodiment, the scanning position of the scan Lwm is corrected. Alternatively, the correction of the scanning position may be performed to the scan preceding the scan Lwm. In that case, the discontinuity of scanning pitch can be smoothed by distributing the fractional adjustment used in the correction over the two or more scans.

Next, the raster image processing method in another embodiment of the invention will be explained.

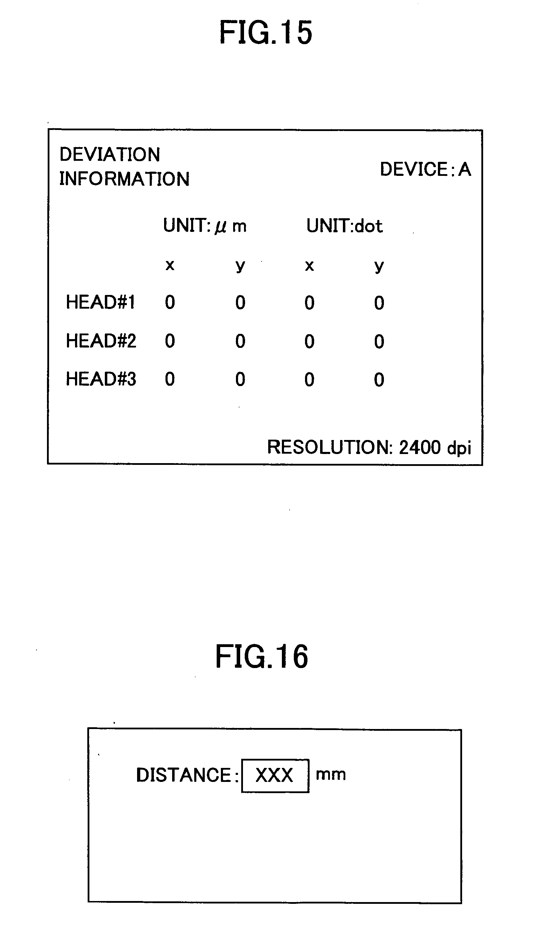

In the rasterizing device of this embodiment, the deviation information is read, and the read value of the deviation information is displayed on the display monitor as shown in FIG. 15. FIG. 15 shows an example of a display screen which indicates the deviation information.

A list of the deviation information for each recording head is displayed on the display screen of FIG. 15. For example, on the display screen of FIG. 15, the amount of deviation per length or pixel is displayed.

The rasterizing device in this embodiment is adapted with a predetermined display screen on which the deviation information is corrected. For example, the rasterizing device updates the old deviation information to new deviation information by inputting the new deviation information on the screen and depressing the o.k. button.

The old deviation information may not be canceled at the time of updating, but it may be stored so that the old deviation information may be read out as a revision history.

When a plurality of image forming devices are used, the deviation information may be used with the identification number to indicate which of the image forming devices is the source of the deviation information. A specific identification number is given to each of the plurality of image forming devices. Also, a specific identification number is also given to the deviation information. The database is adapted to associate the respective identification numbers to the image forming devices and the deviation information, and each of the image forming devices can use the deviation information specific to the image forming device by means of the database.

Next, the raster image processing method in another embodiment of the invention will be explained.

In this embodiment, optical-path information will be explained. Optical-path information is used to indicate an optical path in which a recording energy flux from the recording head 6 is outputted to the recording medium 2. For example, a recording beam is assumed to be a straight line, and, in the image forming device, the coefficients of the equation of the three-dimensional straight line of a recording beam are measured beforehand, and a number of optical-path equations with the measured coefficients for the number of the recording heads 6 are stored beforehand.

Moreover, in the image forming device, a recording surface equation represents the 3D surface of the recording medium 2. The recording surface equation may be determined based on the design arrangement of the image forming device.

Points of intersection between a recording surface equation and an optical-path equation correspond to recording positions.

The image forming device adjusts by carrying out the parallel displacement of the optical-path equation so that the deviation information and the position of a point of intersection may be in agreement at the time of shipment.

A case in which the distance of the recording medium 2 and the recording head 6 is changed will be explained. FIG. 16 shows an example of a display screen in which the distance between the recording medium 2 and the recording head 6 is inputted and displayed.

As shown in FIG. 16, the change of the distance of the recording head 6 and the recording medium 2 is expressed as a parallel displacement of the optical-path equation. A new point of intersection is a point of intersection between the new optical-path equation created after parallel displacement is performed and the recording surface equation.

The difference between the new point of intersection and the former point of intersection is used as a correction value to the deviation information. Namely, the deviation information which corrected the part which changed the irradiation position of the recording beam because distance changed is generable by adding the correction for deviation information correction value to express to deviation information.

The optical-path equation can determined for any change of distance and for a movement in any direction similarly. Even when the direction of the optical path changes, the optical-path equation can be changed by rotation of light. Such adjustment parameters may be provided in the image forming device.

The positions of the recording medium 2 and the recording head 6 are relative, and even if the recording surface equation changes, the relative positions remain unchanged.

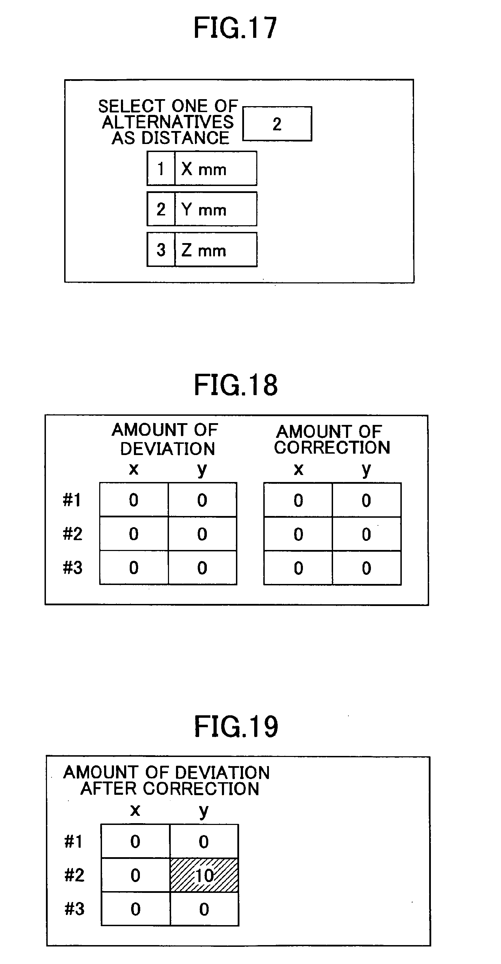

As shown in FIG. 17, two or more alternatives for the distance information may be displayed, instead of a numeric value, and a value of the selected alternative is determined as the distance information value. Alternatively, two or more images showing the degree of distance may be displayed and the distance value is not displayed directly. In that case, a value corresponding to the selected image is determined as the distance information value.

The representation of distance information is not limited to the displaying on the monitor. A bar graph representation of distance information may be used by arranging a plurality of digital display emitters, LEDs, or LCDs, side by side to indicate a bar graph.

The distance information may be changed by turning the dial of a potentiometer. In that case, the distance information may be updated by using the correspondence between the amount of rotation of the dial and the distance change.

Change of the distance information may be attained by adding the encoder adapted for detect a distance, to the device adapted for changing a mechanical distance between the recording medium 2 and the recording head 6. In that case, the mechanical distance is detected, and the distance information is changed according to the detected mechanical distance.

For example, when changing the distance of a screw by rotation, the encoder adapted for detecting rotation of the screw may be attached, the change of the distance may be detected from the pitch of the screw and the rotational frequency of the screw, and the distance information may be changed accordingly.

When the amount of deviation exceeds the predetermined amount, it is conceivable that abnormality arises in the image forming device. Therefore, it is necessary to enable the operator to check the value on the display monitor as shown in FIG. 18.

FIG. 18 shows an example of a display screen in which the amount of deviation and the amount of correction are indicated for each recording head.

Since the operator can check the magnitude of the amount of deviation on the display monitor, the operator can easily recognize the current state of the image forming device. For example, when the amount of deviation exceeds the predetermined amount, the operator's attention may be called by changing the indication on the display monitor to that shown in FIG. 19.

FIG. 19 shows an example of a display screen in which the amount of deviation after correction exceeding a predetermined amount is indicated. For example, on the display screen of FIG. 19, in order to show that the amount of deviation after the correction of recording head #2 has exceeded the tolerance, the format of a display of the amount of deviation after the correction beyond the tolerance is changed, and the color of the display is changed.

When the amount of deviation after correction exceeds the tolerance, it is determined that failure occurs in the image forming device. The occurrence of failure in the image forming device may be notified to the operator using a display screen, an optical emission device or and a voice output device.

Next, the rasterizing device in an embodiment of the invention will be explained.

The rasterizing device in this embodiment is adapted for embedding a predetermined mark in the specified position of the raster image data of each recording head 6.

The image forming device records the raster image data with which the predetermined mark was embedded on the recording medium 2.

The image processing device measures the position of the mark recorded on the recording medium 2.

The image forming device determines deviation information from the position of the adjacent mark.

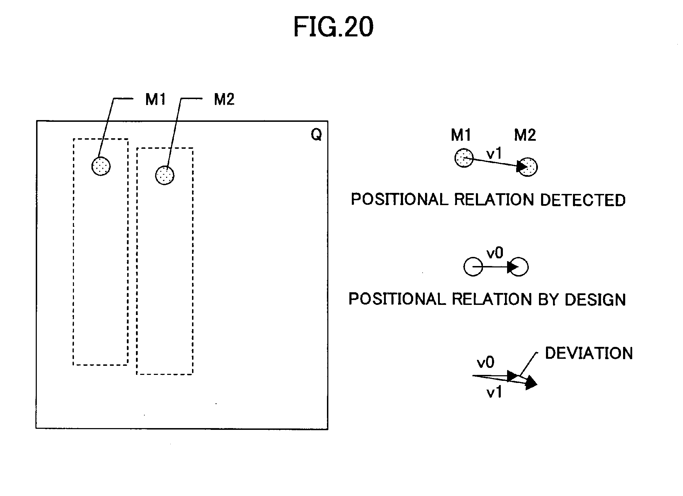

FIG. 20 shows an example of the raster image data of each recording head 6 in which predetermined marks are embedded at predetermined positions.

The image forming device records the raster image data in which the predetermined marks M1 and M2 are embedded on the recording medium Q. The mark M1 is recorded by one recording head 6 on the recording medium Q.

The mark M2 is recorded on the recording medium Q by an recording head 6 which is adjacent to the above recording head 6.

The image processing device detects the positions of the marks M1 and M2 recorded on the recording medium 2, and determines a vector v1 indicating the positional relation between the mark M1 and the mark M2.

Supposing that the vector v0 indicates the positional relation between the marks M1 and M2 which should be recorded by design, the difference between the vector v1 and the vector v0 is equivalent to the amount of deviation.

Thus, the image processing device computes the amount of deviation between all the recording heads 6, and makes this deviation information. The mark M1 and the position of M2 may photo a two-dimensional image with a camera etc., and it may ask for vector v1 by recognizing a mark by the image processing.

Next, the image forming device in an embodiment of the invention will be explained.

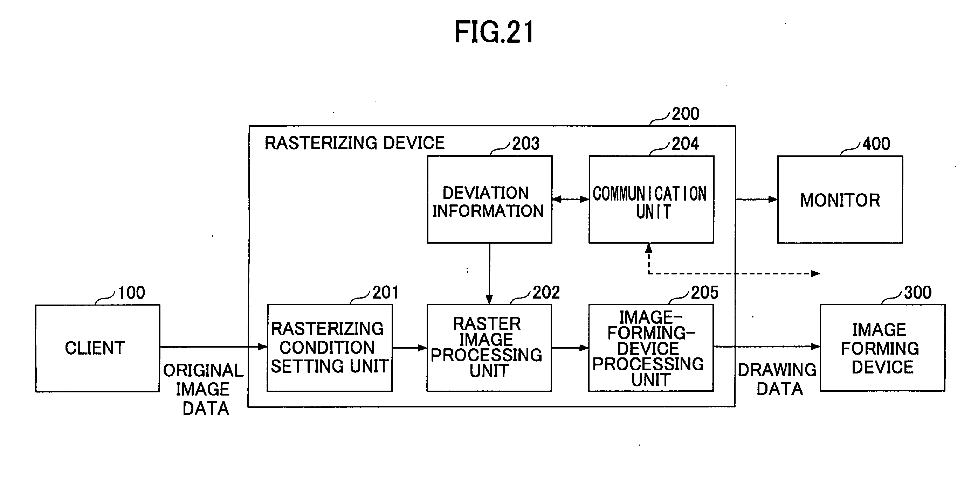

FIG. 21 shows the composition of an example of the image forming system containing the rasterizing device.

The rasterizing device 200 of FIG. 21 is adapted to perform the raster image processing method in any of the above-mentioned embodiments.

For example, the rasterizing device 200 is constituted by a computer, and a program which defines the procedure of the raster image processing method in any of the above-described embodiments is stored in the computer memory.

The rasterizing device 200 receives the deviation information 203 from an external device via the communication unit 204. The rasterizing device 200 displays the required information on the monitor 400.

The rasterizing device 200 receives the original image data from the client 100. The rasterizing device 200 outputs the drawing data (raster image data) in which the rasterizing of the original image data is performed, to the image forming device 300.

The rasterizing condition setting unit 201 of the rasterizing device 200 specifies the image forming device 300 to which the drawing data is outputted, from the original image data which is received from the client 100.

The rasterizing condition setting unit 201 determines the rasterizing conditions, such as the size of an image to which the original image data is developed, the resolution, the kind of recording medium, the expansion/ reduction, the rotation, the mirror image processing, etc.

The raster image processing unit 202 performs the rasterizing processing according to the rasterizing conditions. In this case, the raster image processing unit 202 reads out the deviation information 203 of the image forming device 300 to which the drawing data is outputted. The read processing which reads the deviation information 203 of the image forming device 300 can be realized by assigning a specific ID to the image forming device 300 and associating the deviation information 203 and the assigned ID.

The image forming device processing unit 205 conforms the rasterized original image data, in which the rasterizing was performed, with the input format of the image forming device 300, and outputs the resulting image data as the drawing data to the image forming device 300. The scanning information may be included in the drawing data.

An ID which identifies the image data element arranged in the image may be assigned to the drawing data element created for each recording head 6, and such individual image files may be stored. Or such individual image files may be linked in the sequence of the image data elements to form a single file. An ID indicating which image forming device 300 the drawing data is generated from its deviation information is assigned to the drawing data.

Next, the raster image processing method in an embodiment of the invention will be explained.

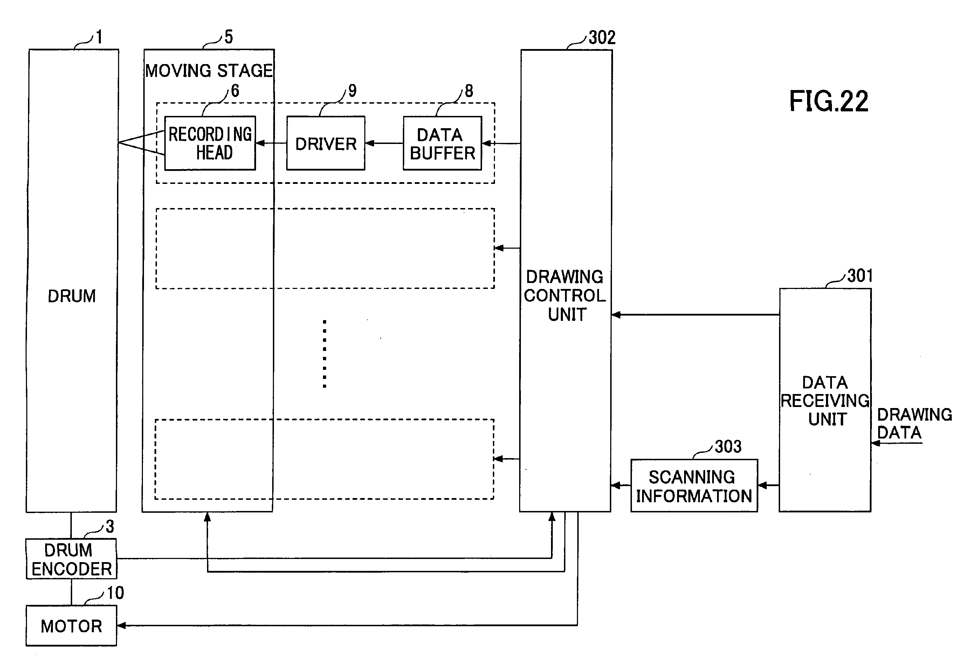

FIG. 22 shows the composition of the image forming device in an embodiment of the invention.

The data receiving unit 301 of the image forming device 300 receives the drawing data. The data receiving unit 301 may be configured so that the data receiving unit 301 makes, at this time, reference to the ID given to the received drawing data and detects that the received drawing data is created from the deviation information of the image forming device 300 itself. If it is not, the data receiving unit 301 may stop the drawing and output to the control panel an alarm message indicating that it is a drawing data of a different image forming device.

In the data receiving unit 301, the drawing data is divided into the image data elements for the recording heads and the scanning information 303, and they are outputted separately. The drawing control unit 302 reads the scanning information 303 related to the axial direction of the drum, and determines the coordinates of the moving stage 5 in the sequence of the scans. The drawing control unit 302 controls the motor 10 to move the moving stage 5 to the determined coordinates.

The drawing control unit 302 transmits the image data for the recording heads to the data buffer 8 corresponding to each recording head 6. The image data transmitted to the data buffer 8 is synchronized with the rotation of the drum 1, and each recording head 6 is driven through the driver 9. If the information on the rotation direction of the drum 1 is included in the scanning information, the drawing control unit 302 detects the rotation position of the drum 1 from the drum encoder 3, and changes the recording start coordinates.

The recording start coordinates can be changed independently of each recording head 6. For example, the rotation from the detection of the home position of the drum 1 to the recording start coordinates can be performed by detecting the rotation of the drum 1.

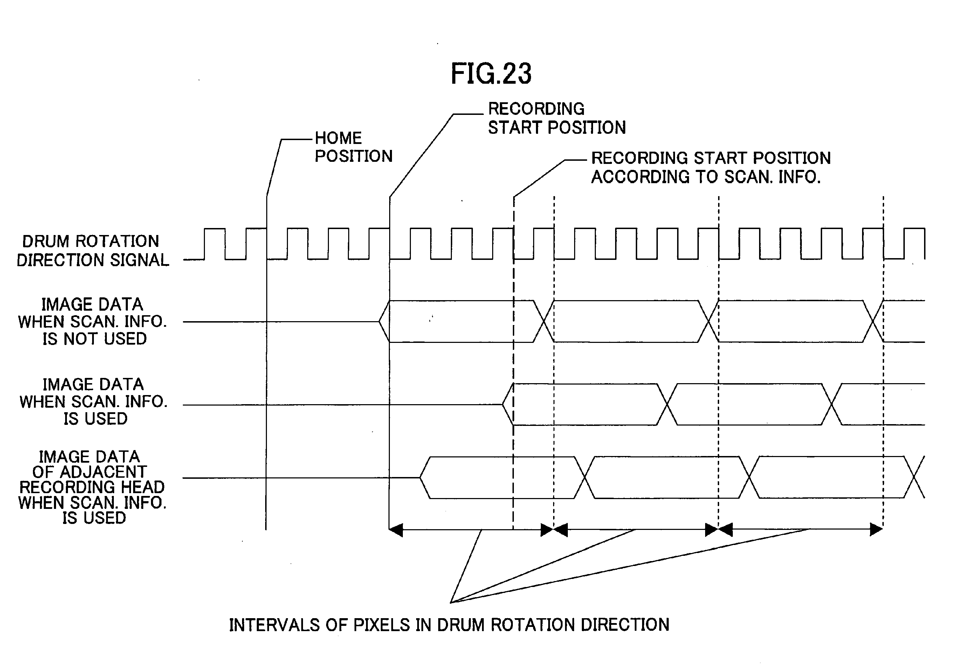

The drawing control unit 302 reads the position of the rotation direction of the drum 1 from the scanning information, and when the rotation position of the drum 1 which matches the read position is reached, the drawing control unit 302 starts image recording as shown in FIG. 23.

FIG. 23 is a timing chart for explaining a case in which the recording start coordinates are changed independently of each recording head 6.

As shown in FIG. 23, the drawing control unit 302 can adjust the recording start coordinates of the adjacent recording head 6 in the rotation direction of the drum 1. The drawing control unit 302 can also perform the correction in the amount of less than a single scanning width.

In the raster image correction step of the previous embodiment, when the rotation direction of the drum 1 is a height direction, the area equivalent to the non-printing data in the height direction is not provided, and the correction amount in the height direction is recorded in the scanning information, and the correction in the height direction is attained. In this case, the area equivalent to the non-printing data in the drawing data can be reduced, and the data size can be made small.

If the drum 1 is rotated by one revolution, the drawing control unit 302 moves the moving stage 5 to the coordinates where the next scan is performed.

The rasterizing device 200 as shown in the previous embodiment may be incorporated in image forming device 300. The example in which the recording head 6 is moved in a step-wise manner has been explained. Also, in the example in which the recording head 6 is moved in a spiral manner, the same processing is performed. The feeding speed in the spiral manner is adjusted according to the deviation information, and it is changed for every scan.

Next, the image forming device in an embodiment of the invention will be explained.

For example, the recording head 6 as shown in FIG. 2 is arranged in the image forming device 300 of FIG. 22. In this embodiment, the LD 601 is used as the light source of the recording head 6. The light from the light source is converted into the converging light beam by the double-sided aspheric lens 603. Adhesion fixation of the double-sided aspheric lens 603 is fixed by using the adhesive agent made of an UV-curing resin.

In the image forming device 300, the plurality of recording heads 6 as shown in FIG. 2 are arranged along the straight line in the axial direction of the drum 1 at intervals of substantially equal distances.

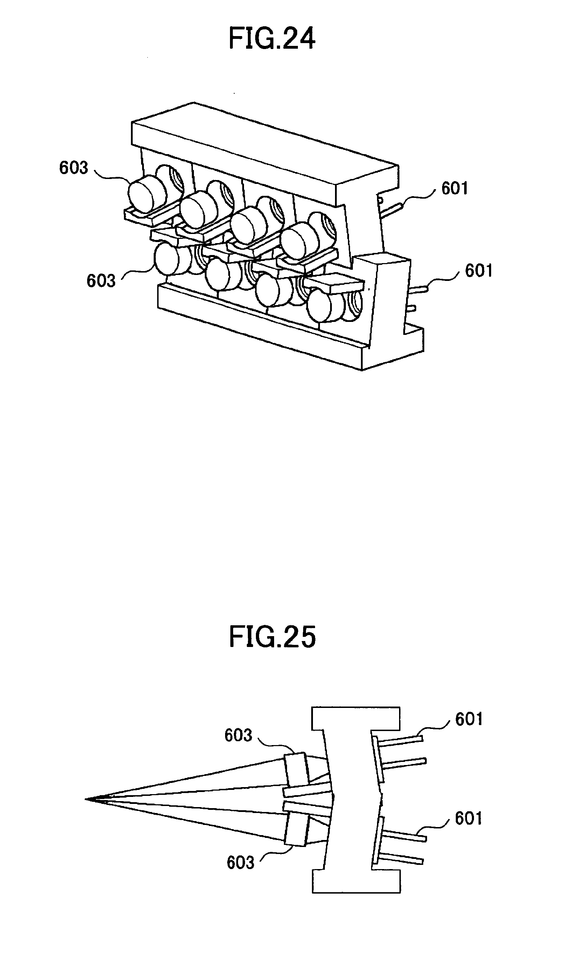

FIG. 24 is a perspective diagram showing an example of the plurality of recording heads 6 arranged in a staggered manner. FIG. 25 shows the appearance of the recording heads 6 arranged in the staggered manner when viewed from the lateral direction.

The converging points of the laser beams of the recording heads 6 arranged in the staggered manner are adjusted so that they are aligned with the generally straight line. The converging points of the laser beams of the recording heads 6 arranged in the staggered manner are placed at intervals of substantially equal distances.

Since the plurality of recording heads 6 are arranged in a staggered manner, the recording heads 6 can be arranged within the interval narrower than the width of the LD 601 or the double-sided aspheric lens 603. Thus, the number of recording heads 6 which can be arranged there can be increased by using the staggered arrangement of the recording heads 6.

By increasing the number of recording heads 6 in the image forming device 300, it is possible for the image forming device 300 to make the size of the image formed by each of the plurality of recording heads 6 small, and it is possible to shorten the time needed for each recording head to perform the imaging.

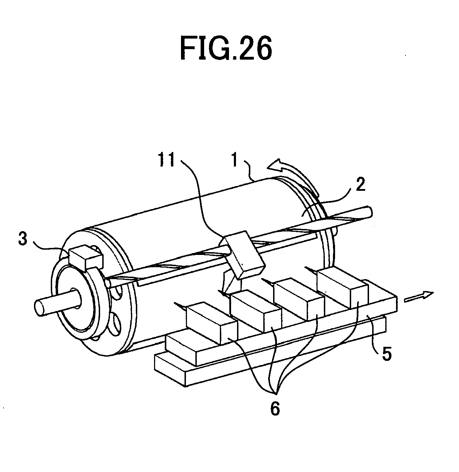

Next, the image forming device in an embodiment of the invention will be explained. FIG. 26 shows the composition of a modification of the image forming device of FIG. 1 in which a camera 11 is incorporated.

In the image forming device of FIG. 26, the camera 11 is arranged so that the camera 11 is movable to the drum 1 in a direction parallel to the axial direction of the drum 1, and this camera 11 detects the position of a recording beam outputted to the recording medium 2 by each of the plurality of recording heads 6.

Specifically, the camera 11 captures an image on the surface of the recording medium 2. For example, if the raster image data including the marks embedded at the predetermined positions, as shown in FIG. 20, is recorded on the recording medium 2, the camera 11 captures the image including the marks.

In this manner, the image forming device 300 is adapted for determining deviation information based on the positions of the marks in the captured image. The determined deviation information is transmitted from the image forming device 300 to the rasterizing device 200.

Alternatively, the image forming device 300 may be arranged so that the predetermined marks are recorded on the surface of the drum 1, instead of using the recording medium 2. In this case, the marks are arranged along the line at a given angle to the axial direction of the drum 1. The number of such marks on the surface of the drum 1 may be the same as the number of the recording heads 6 provided in the image forming device. The LD 601 of each of the recording heads 6 is turned ON, and the camera 11 performs the imaging of the marks on the drum 1 and the light spot by the LD 601.

The image forming device 300 performs the imaging of all the marks of the recording heads 6 and all the light spots by the LDs 601, by adjusting the position of the camera 11 to each of the recording heads 6 respectively.

The image forming device 300 acquires the positional relation between the marks included in the images and the light spots by the LD 601, and computes deviation information based on the acquired positional relation. The image forming device 300 moves the camera 11 to a boundary position between the recording heads 6 so that the image of the boundary position may be taken.

The image forming device 300 moves the moving stage 5 to a predetermined scanning start position, turns ON the LD 601 of the right recording head 6, and performs the imaging of the light spot by the LD 601 using the camera 11.

The image forming device 300 moves the moving stage 5 to a predetermined scanning end position next, turns ON the LD 601 of the left recording head 6, and performs imaging of the light spot by the LD 601 using the camera 11.

The image forming device 300 determines the positional relation between the light spots of the two images, and sets the position relation as being the deviation information between the adjacent recording heads 6. By moving the camera 11 to the adjacent boundary position between the recording heads 6 similarly, the image forming device 300 determines the deviation information for all the recording heads 6.

When the image of the light spot by the LD 601 cannot be observed simultaneously with the marks on the drum 1 because of an improper brightness of the light spot, a portion of the surface of the drum 1 is modified to a non-glare portion that causes distraction or absorption by the laser beam, and the rotation of the drum 1 is adjusted so that the non-glare portion is irradiated by the laser beam for observation.

The image forming device 300 is adapted for adjusting the laser-beam distraction or absorption characteristic of the drum surface portion, so that the image of the light spot by the LD 601 may be observed simultaneously with the marks on the drum 1.

The brightness of the light spot by the LD 601 can be adjusted to the proper level by reducing the output of the emission power of the LD 601. The image forming device 300 may be provided with the CCD, so that it may acquire the positions of the marks on the drum 1 independently. In such a case, the position of camera 11 is not changed by the movement of the camera 11.

According to the rasterizing device and the image forming device according to the invention, the raster image data, generated through the rasterizing of the original image data, is divided into the areas of the plurality of recording heads, the raster image data after the rasterizing can be treated as the plurality of raster image data elements each having a small capacity, and the rasterizing processing can be performed with a small memory.

**Claims**

1. A raster image processing method adapted for a rasterizing device which converts original image data into raster image data suitable for an image forming device having a plurality of recording heads and performing recording of an image on a recording medium using the plurality of recording heads, the method comprising the steps of:

   dividing the original image data into image data elements for areas of the recording medium for the plurality of recording heads to perform the recording of the image respectively; and
   rasterizing the divided original image data elements into the raster image data suitable for the image forming device.

2. The raster image processing method according to claim 1 further comprising the steps of:

   computing, prior to the step of dividing the original image data, the areas of the recording medium for the plurality of recording heads based on deviation information that indicates an amount of deviation between an ideal record range and an actual record range of each of the plurality of recording heads; and
   correcting the raster image data, obtained in the step of rasterizing the divided original image data elements, based on the deviation information, to eliminate the amount of deviation for each of the plurality of recording heads.

3. The raster image processing method according to claim 2 wherein elements of the corrected raster image data after the step of correcting the raster image data have a same image size for the plurality of recording heads.

4. The raster image processing method according to claim 1 or 2 wherein the step of rasterizing the divided original image data elements is performed in parallel in accordance with a plurality of processes.

5. The raster image processing method according to claim 2 wherein the deviation information includes coordinates of each of the areas of the recording medium where the plurality of recording heads performs the recording of the image respectively.

6. The raster image processing method according to claim 2 wherein the deviation information includes a difference between coordinates of one of the areas where the plurality of recording heads perform the recording of the image respectively, and actual coordinates of a corresponding one of the areas of the recording medium.

7. The raster image processing method according to claim 2 wherein the deviation information includes an amount of discontinuity between continuous pixels which are recorded on the recording medium by adjacent ones of the plurality of recording heads.

8. The raster image processing method according to claim 2 wherein the step of computing the areas comprises:

   retrieving the deviation information related to adjacent ones of the plurality of recording heads;

expanding a width of the raster image data for one of the areas when a gap exists between the areas of the original image data related to the adjacent ones of the plurality of recording heads; and

reducing a width of the raster image data for one of the areas when an overlap exists between the areas of the original image data related to the adjacent ones of the plurality of recording heads.

9. The raster image processing method according to claim 8 wherein the step of expanding the width is adapted so that a gap between adjacent ones of the areas is less than 0.5 pixel.

10. The raster image processing method according to claim 8 wherein the step of reducing the width is adapted so that an overlap between adjacent ones of the areas is less than 0.5 pixel.

11. The raster image processing method according to claim 2 wherein the step of correcting the raster image data comprises:

retrieving the deviation information related to adjacent ones of the plurality of recording heads; and shifting the raster image data for said one recording heads to a direction opposite to a level difference direction when a level difference arises to the area of the original image data related to the adjacent ones of the plurality of recording heads.

12. The raster image processing method according to claim 2 wherein the step of rasterizing the divided original image data elements comprises:

retrieving the deviation information related to adjacent ones of the plurality of recording heads; and determining a margin when performing the rasterizing of the divided original image data elements.

13. The raster image processing method according to claim 2 wherein the step of correcting the raster image data comprises:

computing scanning information which express a scanning position when the recorded at a time of image formation raster image data with which the rasterizing of said raster image data correction step is performed; and correcting the raster image data so that the overlap is avoided when the distant part is filled when it judges and there is a detached building, whether a detached building or an overlap which is less than 1 pixel is in an area of original image data which said adjacent recording head should record, and, and there is an overlap.

14. The raster image processing method according to claim 13 wherein the scanning information is embedded in the raster image data.

15. The raster image processing method according to claim 13 wherein the raster image data are arranged in order according to a sequence of scanning and the scanning information is stored in a file which it is arranged by turn scanned, and a code to which said raster image data and said scanning information express correlation mutually is embedded, and is different from said raster image data and said scanning information.

16. The raster image processing method according to claim 2 wherein the image forming device comprises:

a display unit displaying the deviation information stored in a deviation information storage unit; an input unit inputting new deviation information; and a deviation information updating unit updating a content of the stored deviation information to the new deviation information inputted from the input unit.

17. The raster image processing method according to claim 16 wherein the deviation information is converted per scan in accordance with resolution information, and the resulting deviation information is displayed.

18. An image processing method adapted for an image forming device having a plurality of recording heads and performing recording of an image on a recording medium using the plurality of recording heads, the image processing method comprising the steps of:

storing a positional relation between each of the plurality of recording heads and the recording medium, and optical-path information related to an irradiation energy of each of the plurality of recording heads;

computing coordinates of an intersection between the recording medium and an optical path of the irradiation energy of each recording head based on the stored positional relation and the stored optical-path information; computing a correction value for correcting deviation information, based on the coordinates of intersection, the deviation information indicating an amount of deviation between recording positions of adjacent ones of the plurality of recording heads; and

correcting the deviation information of the adjacent ones of the plurality of recording heads by using the computed correction value.

19. The image processing method according to claim 18 further comprising the steps of:

computing areas of the recording medium for the plurality of recording heads based on the corrected deviation information of each of the plurality of recording heads;
dividing original image data into image data elements for the areas of the recording medium for the plurality of recording heads to perform the recording of the image respectively;
rasterizing the divided original image data elements into raster image data suitable for the image forming device; and
correcting the raster image data based on the deviation information to eliminate the amount of deviation for each of the plurality of recording heads.

20. A rasterizing device adapted for performing the raster image processing method according to any of claims 1 to 17.

21. An image forming device comprising the rasterizing device according to claim 20.

22. The image forming device according to claim 21 wherein each of the plurality of recording heads comprises a semiconductor laser and a double-sided aspheric lens.

23. The image forming device according to claim 22 wherein the plurality of recording heads are arranged in a staggered manner.

24. The image forming device according to claim 21 wherein the image forming device comprises:

a beam-position detection unit configured to detect a position of a light beam outputted to the recording medium from each of the plurality of recording heads; and
a deviation information transmission unit configured to determine deviation information based on the detected beam position, and to transmit the deviation information from the image forming device to the rasterizing device.

25. The image forming device according to claim 21 wherein the image forming device comprises:

a display unit displaying the deviation information stored in a deviation information storage unit;
an input unit inputting new deviation information; and
a deviation information updating unit updating a content of the stored deviation information to the new deviation information inputted from the input unit.

26. The image forming device according to claim 21 wherein the image forming device comprises:

a mark reading unit detecting a position of a mark on a drum, and a position of a light spot formed on the recording medium by a light beam outputted to the recording medium from each of the plurality of recording heads; and
a determining unit determining deviation information based on the detected mark position and light spot position from the mark reading unit.

# FIG.1

# FIG.2

# FIG.3

# FIG.4

RECORDING SURFACE

IDEAL RECORD RANGE OF HEAD #1

IDEAL RECORD RANGE OF HEAD #2

IDEAL RECORD RANGE OF HEAD #3

# FIG.5

ACTUAL RECORD RANGE OF HEAD #1    ACTUAL RECORD RANGE OF HEAD #2    ACTUAL RECORD RANGE OF HEAD #3

# FIG.6

IDEAL RECORD POSITION

x

y

ACTUAL RECORD POSITION

# FIG.7

AREA OF HEAD R1

AREA OF HEAD R2

AREA OF HEAD Rn

# FIG.8

# FIG.9

xm

| Rwm | | Rwm+1 |

# FIG.10

| Rw'm | Rw'm+1 |

# FIG.11

# FIG.12

# FIG.13

# FIG.14

# FIG.15

DEVIATION INFORMATION

DEVICE : A

|  | UNIT: $\mu$ m | | UNIT:dot | |
|---|---|---|---|---|
|  | x | y | x | y |
| HEAD#1 | 0 | 0 | 0 | 0 |
| HEAD#2 | 0 | 0 | 0 | 0 |
| HEAD#3 | 0 | 0 | 0 | 0 |

RESOLUTION: 2400 dpi

# FIG.16

DISTANCE: XXX mm

## FIG.17

SELECT ONE OF
ALTERNATIVES    | 2 |
AS DISTANCE

| 1 | X mm |

| 2 | Y mm |

| 3 | Z mm |

## FIG.18

|     | AMOUNT OF DEVIATION | | AMOUNT OF CORRECTION | |
| --- | --- | --- | --- | --- |
|     | x | y | x | y |
| #1 | 0 | 0 | 0 | 0 |
| #2 | 0 | 0 | 0 | 0 |
| #3 | 0 | 0 | 0 | 0 |

## FIG.19

AMOUNT OF DEVIATION
AFTER CORRECTION

|     | x | y |
| --- | --- | --- |
| #1 | 0 | 0 |
| #2 | 0 | 10 |
| #3 | 0 | 0 |

# FIG.20

M1　M2

Q

M1　M2

v1

POSITIONAL RELATION DETECTED

v0

POSITIONAL RELATION BY DESIGN

v0

DEVIATION

v1

# FIG.21

RASTERIZING DEVICE 200

MONITOR 400

IMAGE FORMING DEVICE 300

COMMUNICATION UNIT 204

IMAGE-FORMING-DEVICE PROCESSING UNIT 205

DEVIATION INFORMATION 203

RASTER IMAGE PROCESSING UNIT 202

RASTERIZING CONDITION SETTING UNIT 201

CLIENT 100

ORIGINAL IMAGE DATA

DRAWING DATA

FIG.22

# FIG.23

INTERVALS OF PIXELS IN DRUM ROTATION DIRECTION

## FIG.24

## FIG.25

# FIG.26

**European Patent Office**

**EUROPEAN SEARCH REPORT**

Application Number

EP 06 01 0583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/094502 A (HEWLETT-PACKARD COMPANY; ABELLO, LLUIS) 13 November 2003 (2003-11-13) * abstract; figures 1-5,10,11 * * page 3, line 16 - line 21 * * page 5, line 12 - line 15 * * page 8, line 19 - line 27 * * page 19, line 1 - line 8 * * page 25, line 6 - page 26, line 27 * ----- | 1,4 | INV. H04N1/047 H04N1/387 |
| X | US 5 040 003 A (WILLIS ET AL) 13 August 1991 (1991-08-13) * abstract; figures 2-4 * * column 4, line 18 - column 6, line 53 * ----- | 1-8,16, 18-21,25 | |
| A | US 6 024 504 A (WEICHMANN ET AL) 15 February 2000 (2000-02-15) * abstract; figures 1-3 * * column 1, line 24 - line 34 * * column 2, line 35 - column 3, line 5 * ----- | 2-13 | |
| A | US 5 585 836 A (PHAM ET AL) 17 December 1996 (1996-12-17) * abstract; figures 1,4,8 * * column 14, line 16 - line 50 * ----- | 2 | TECHNICAL FIELDS SEARCHED (IPC) H04N B41J |
| A | EP 0 866 603 A (FUJITSU LIMITED) 23 September 1998 (1998-09-23) * abstract; figures 1,5-8,10-24 * ----- | 2,18,26 | |
| A | US 2001/055120 A1 (SAWADA KENICHI ET AL) 27 December 2001 (2001-12-27) * abstract; figure 9 * ----- | 16,25 | |
| A | EP 0 903 691 A (CANON KABUSHIKI KAISHA) 24 March 1999 (1999-03-24) * abstract; figures 10,13 * * paragraph [0076] - paragraph [0079] * ----- -/-- | 1,2,4 | |

The present search report has been drawn up for all claims

| Place of search | Date of completion of the search | Examiner |
|---|---|---|
| Berlin | 10 August 2006 | Kassow, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 06 01 0583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PATENT ABSTRACTS OF JAPAN vol. 2003, no. 12, 5 December 2003 (2003-12-05) -& JP 2005 088505 A (RICOH CO LTD), 7 April 2005 (2005-04-07) * abstract; figures 1-3,8 * ----- | 19,22-25 | |
| A | PATENT ABSTRACTS OF JAPAN vol. 2003, no. 12, 5 December 2003 (2003-12-05) -& JP 2005 028763 A (RICOH CO LTD), 3 February 2005 (2005-02-03) * abstract; figures 1-16 * ----- | 18 | |
| A | PATENT ABSTRACTS OF JAPAN vol. 2003, no. 12, 5 December 2003 (2003-12-05) -& JP 2004 284132 A (RICOH CO LTD), 14 October 2004 (2004-10-14) * abstract * & JP 2004 341373 A (RICOH CO LTD) 2 December 2004 (2004-12-02) & US 2006/082612 A1 (MORIKAWA ET AL.) 20 April 2006 (2006-04-20) * abstract; figures 1-31 * ----- | 1-26 | TECHNICAL FIELDS SEARCHED (IPC) |

The present search report has been drawn up for all claims

| Place of search | Date of completion of the search | Examiner |
|---|---|---|
| Berlin | 10 August 2006 | Kassow, H |

EPO FORM 1503 03.82 (P04C01)

## ANNEX TO THE EUROPEAN SEARCH REPORT
## ON EUROPEAN PATENT APPLICATION NO.

EP 06 01 0583

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2006

| Patent document cited in search report | | Publication date | Patent family member(s) | | Publication date |
|---|---|---|---|---|---|
| WO 03094502 | A | 13-11-2003 | AU | 2003227685 A1 | 17-11-2003 |
| | | | AU | 2003233085 A1 | 17-11-2003 |
| | | | CA | 2484377 A1 | 13-11-2003 |
| | | | CA | 2484415 A1 | 13-11-2003 |
| | | | CN | 1663233 A | 31-08-2005 |
| | | | CN | 1666497 A | 07-09-2005 |
| | | | WO | 03093017 A2 | 13-11-2003 |
| | | | EP | 1501681 A2 | 02-02-2005 |
| | | | EP | 1502430 A1 | 02-02-2005 |
| | | | GB | 2387817 A | 29-10-2003 |
| | | | JP | 2005529001 T | 29-09-2005 |
| | | | JP | 2005525026 T | 18-08-2005 |
| | | | US | 2006120787 A1 | 08-06-2006 |
| | | | US | 2005260021 A1 | 24-11-2005 |
| US 5040003 | A | 13-08-1991 | NONE | | |
| US 6024504 | A | 15-02-2000 | CA | 2239701 A1 | 07-12-1998 |
| | | | DE | 19724066 A1 | 10-12-1998 |
| | | | FR | 2765011 A1 | 24-12-1998 |
| | | | GB | 2326553 A | 23-12-1998 |
| | | | JP | 3142516 B2 | 07-03-2001 |
| | | | JP | 11017938 A | 22-01-1999 |
| US 5585836 | A | 17-12-1996 | NONE | | |
| EP 0866603 | A | 23-09-1998 | DE | 69824068 D1 | 01-07-2004 |
| | | | DE | 69824068 T2 | 30-12-2004 |
| | | | DE | 69830346 D1 | 30-06-2005 |
| | | | DE | 69830346 T2 | 22-12-2005 |
| | | | JP | 3079076 B2 | 21-08-2000 |
| | | | JP | 10315545 A | 02-12-1998 |
| | | | US | 6118463 A | 12-09-2000 |
| US 2001055120 | A1 | 27-12-2001 | JP | 2001301232 A | 30-10-2001 |
| EP 0903691 | A | 24-03-1999 | JP | 11123861 A | 11-05-1999 |
| | | | US | 6339480 B1 | 15-01-2002 |
| JP 2005088505 | A | 07-04-2005 | NONE | | |
| JP 2005028763 | A | 03-02-2005 | NONE | | |
| JP 2004284132 | A | 14-10-2004 | NONE | | |
| JP 2004341373 | A | 02-12-2004 | NONE | | |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 06 01 0583

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2006

| Patent document cited in search report | Publication date | Patent family member(s) | Publication date |
|---|---|---|---|
| US 2006082612 A1 | 20-04-2006 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004147260 A
- JP 11291566 A
- JP 3604961 B